(19) Europäisches Patentamt

European Patent Office

Office européen des brevets

(11) Publication number : **0 524 771 A2**

## (12) EUROPEAN PATENT APPLICATION

(21) Application number : **92306513.0**

(22) Date of filing : **16.07.92**

(51) Int. Cl.⁵ : **G01S 5/04, G01S 5/00**

(30) Priority : **23.07.91 GB 9115829**

(43) Date of publication of application :
**27.01.93 Bulletin 93/04**

(84) Designated Contracting States :
**AT BE CH DE DK ES FR GB GR IT LI LU MC NL PT SE**

(71) Applicant : **TERRAFIX LTD.**
**23c Newfield Industrial Estate, High Street Tunstall, Stoke-on-Trent, Staffordshire ST6 5PD (GB)**

(72) Inventor : **Rosson, John Bladon**
**30 St Saviours Street Talke**
**Stoke on Trent ST 7 1LR (GB)**
Inventor : **Mason, Robert John**
**9 Farmfields Rise Woore**
**Crewe CW3 9SZ (GB)**

(74) Representative : **Abnett, Richard Charles**
**REDDIE & GROSE 16 Theobalds Road**
**London WC1X 8PL (GB)**

(54) **D F method.**

(57) A direction finding system comprises one or more receivers which are movable in use. Each receiver includes an automatic heading device (4) to detect receiver orientation θ and an automatic location device (5) to detect receiver position x, y. Receivers optionally include timing devices (6).

In a method of target tracking over time, changes in receiver orientation and position are compensated for automatically to determine instantaneous target positions.

FIGURE 3.

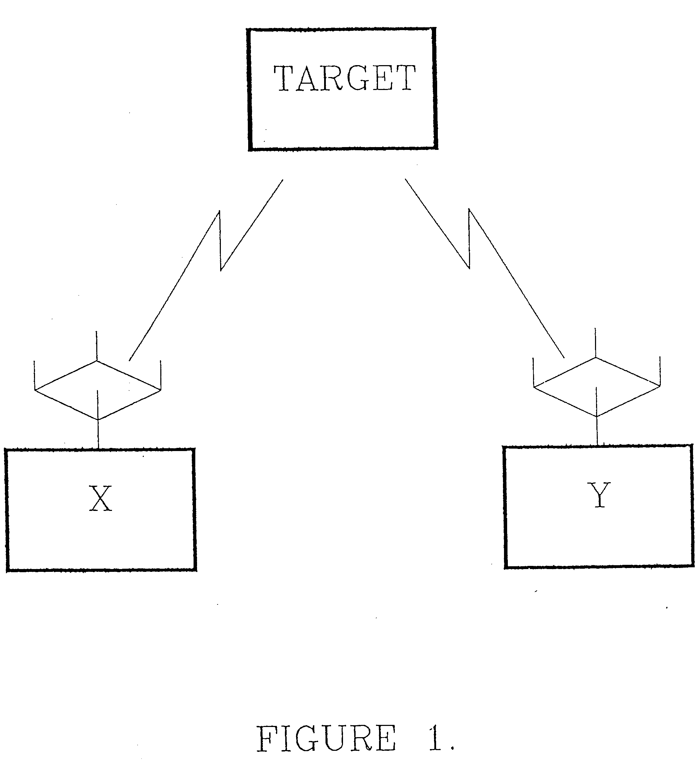

In standard direction finding techniques a target radio source is located by means of using at least two fixed direction finding (DF) receiving sites with directional antennas as shown in Figure 1.

From these two sites measurements of the bearing to a transmitter target can be made using the directional antennas at the sites. The intersection on the bearings from sites X and Y gives the estimated position of the target T.

Two further techniques may be applied for locating the target T from X and Y.

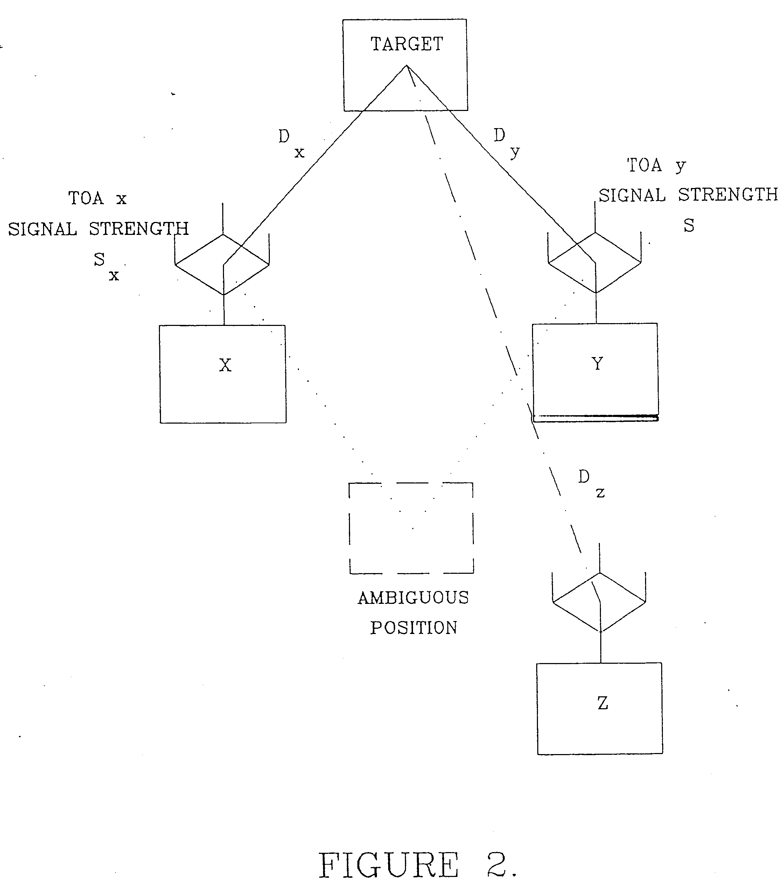

First, measurement of the signal strength from the target T simultaneously at X and Y can give a measure of relative distance of T from the two receiver sites X and Y and thus give two possible positions for the target T (see Figure 2). The ambiguity of the two possible target positions may be resolved by using either directional antennas at X and Y or a third receiving site Z.

Second, the time of arrival (TOA) of a uniquely identifiable part of the transmission from T at the receiving sites X and Y can be measured. This as in the former case gives a measure of the relative distances of the target T from the receiving stations X and Y. The ambiguities may be resolved by the use of either directional antennas or a third receiving site as above.

The latter two techniques require accurate synchronization of the timings between receiver sites, although this can be overcome using differential and calibration techniques.

In practice, either one or a combination of these techniques will be applied.

In all of these cases the accuracy with which the target is located is dependent on the accuracy of the receiver site locations and orientations and for practical operation at high accuracy these receiver sites are normally surveyed.

The need for surveying of fixed tracking station position and the difficulties of adequately map reading the position of a mobile tracking station can introduce substantial errors. These errors may be multiplied by the DF process.

The invention is defined in the appended claims to which reference should now be made.

A preferred embodiment of the invention provides for the automatic measurement of position and orientation of the DF receiving sites to allow the use of transportable and mobile DF receivers to give automatic and continuous target tracking. The illustrated embodiment may be used in a system designed for tracking stolen vehicles such as trucks or lorries.

The invention will be described by way of example with reference to the drawings, in which:

Figure 1 (referred to above) is a basic diagram of a tracking system;

Figure 2 (referred to above) shows how the system resolves an ambiguity;

Figure 3 is a block diagram of a receiving station embodying the invention; and

Figure 4 shows a system incorporating several such receiving stations.

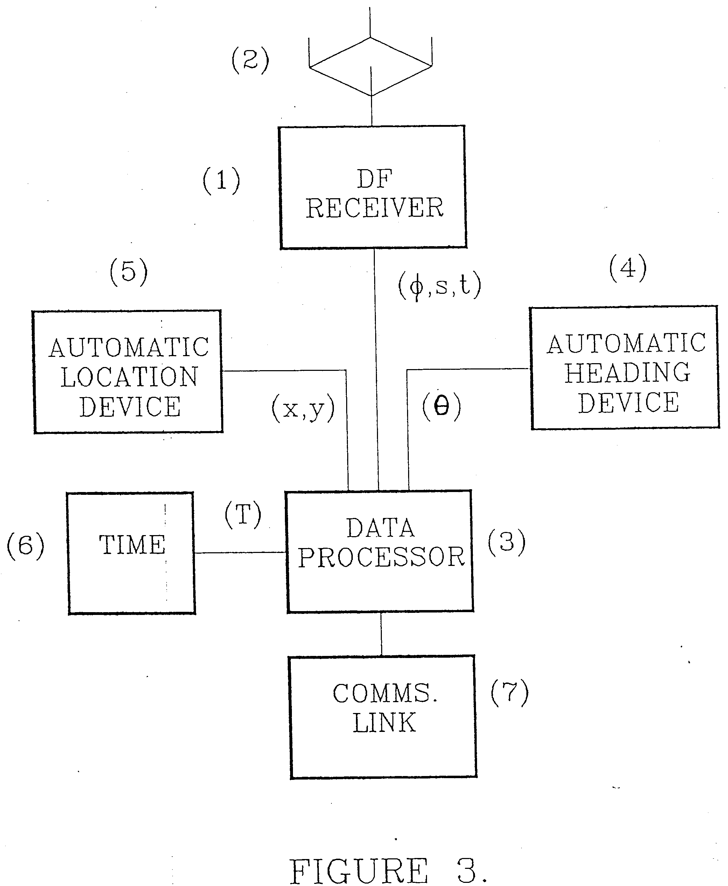

The system layout for a receiving station is shown in Figure 3.

The DF receiver 1 is connected to a directional antenna array 2. The DF receiver outputs the bearing $\phi$ of the target relative to the DF platform and also outputs other relevant parameters such as signal strength s and time of arrival information t. This information is passed to the data processor 3.

An automatic heading device 4 gives the heading of the DF platform with respect to North, $\theta$. This heading may be derived by any heading sensor (for example, a magnetic compass or a gyro compass) provided the value $\theta$ is available as an output to the data processor 3.

The data processor combines the bearing output from the DF receiver, $\phi$, with the heading device output, $\theta$, to form the azimuth to the target from the DF antenna, $\psi$, as

$$\psi = \phi + \theta$$

This combination and measurement process is done in real time.

In accordance with this invention, an automatic location device 5 provides the real-time location of the DF antenna in terms of suitable co-ordinates (x, y); for example, these may be either latitude and longitude or grid co-ordinates. The location device could for example, be based on any form of radionavigation system, inertial navigators or other means provided an output of position is available in real-time. The location co-ordinates are provided to the data processor 3.

A time measuring device 6 may be used optionally with the system to provide a means of accurately timestamping information with the time T. The timing device provides an output of the time T to the data processor 3.

The timing device may derive its time from the location device in some circumstances (for example if the Global Positioning System is used for location).

The data processor 3 obtains the information from the DF receiver, the automatic heading device, the automatic location device and optionally the time device and provides an output in real-time of the DF azimuth $\psi$, and other relevant DF parameters such as signal strength s, and time of arrival information t. In addition the output also contains the position information (x, y) obtained at the same time as the DF information. The output also may contain the time information T to determine when the DF information was gathered. Otherwise the time of gathering is derived from the time when the data is output from the data processor. The output from the data processor is transmitted to the control point via a communications link 7.

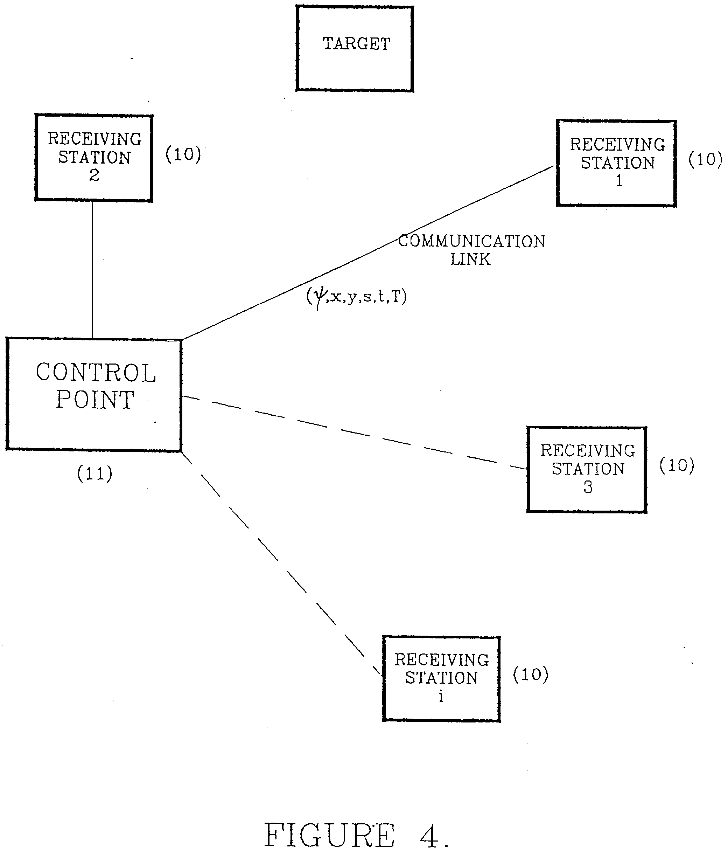

The overall system configuration is shown in Figure 4.

A number of receiving stations 10 send their DF data to the control point 11. Information from at least two stations is necessary to compute a target position.

The information from the stations about the target is of the form:

$\psi i$      Azimuth from receiving station i to target.

(xi,yi)      Position of receiving station.

si,ti      DF information.

Ti      Time.

Because the positions of the receiving stations are accurately known at the instant of measuring the target signal and the azimuths $\psi$ i are also known at that instant, conventional DF techniques may be applied using these position baselines to determine the target position.

It is important to note that the positions (xi, yi) can change dynamically, as can also the orientation of the DF antenna. The positions are measured directly and the antenna orientation is compensated for using information from the real-time heading device.

The position information about the target is computable at the control point whenever the target is transmitting whether the receiving stations are either in motion or stationary. The present system therefore also removes the need to perform a separate accurate survey of the DF receiver position and orientation.

## Claims

1.  A direction finding receiving station comprising a DF receiver with directional antenna, an automatic heading device to compensate for changes in DF platform orientation, an automatic location device to give real-time DF receiver position, and means of transmitting this information to a control point.

2.  A receiver system according to claim 1, further comprising a time device.

3.  A system comprising a number of stations according to claim 1 or 2 connected to a control point where computations of target position are performed.

4.  A system according to claim 3 where the control point is integrated with one of the receiving stations.

5.  A system according to claims 3 or 4, where the receiving stations are either transportable or mobile.

6.  A system according to claims 3 or 4, where target positions are calculated when the receiver stations are mobile.

7.  A system according to claims 3 or 4, where target positions are calculated when the receiver stations are stationary and have not been separately surveyed in position and orientation.

8.  A method of locating a transmitting target with the use of plurality of DF tracking stations, in which each tracking station provides a measurement of target position, characterized by automatically determining the instantaneous location of each tracking station by means of an electronic location device.

TARGET

X

Y

FIGURE 1.

FIGURE 2.

FIGURE 3.

TARGET

RECEIVING
STATION
2
(10)

RECEIVING
STATION
1
(10)

COMMUNICATION
LINK

$(\psi, x, y, s, t, T)$

CONTROL
POINT

(11)

RECEIVING
STATION
3
(10)

RECEIVING
STATION
i
(10)

FIGURE 4.